Europäisches Patentamt

(19) European Patent Office

Office européen des brevets

(11) Publication number: **0 079 577**
**A2**

(12) **EUROPEAN PATENT APPLICATION**

(21) Application number: **82110369.4**

(22) Date of filing: **10.11.82**

(51) Int. Cl.³: **G 02 C 1/08**

(30) Priority: **13.11.81 IT 2505781**

(43) Date of publication of application:
**25.05.83 Bulletin 83/21**

(84) Designated Contracting States:
**AT BE CH DE FR GB IT LI NL SE**

(71) Applicant: **Mascheroni, Francesco**
**Via Milano, 33**
**I-21019 Somma Lombardo Varese(IT)**

(72) Inventor: **Mascheroni, Francesco**
**Via Milano, 33**
**I-21019 Somma Lombardo Varese(IT)**

(74) Representative: **Dr. Ing. A. Racheli & C.**
**Viale San Michele del Carso, 4**
**I-20144 Milano(IT)**

(54) **An engaging device for lens applicable to eyeglass frames.**

(57) This invention relates to a device for application to a standard eyeglass frame, comprising two lens supports (2) connected to the side bars. Each of the lens supports comprise an open ring. The ends (2a, 2b) of this open ring are engaged so that the lens is held by a snap engaging device which comprises among other things a resilient element (5) which works on one end (2b) of said ring to keep the contact between the ends of each support (2). The engagement and disengagement can easily take place moving said resilient element (5).

FIG.1

EP 0 079 577 A2

0079577

Applicant
FRANCESCO MASCHERONI
Via Milano, 33
21019 SOMMA LOMBARDO (Varese) Italy

"AN ENGAGING DEVICE FOR LENS APPLICABLE TO EYEGLASS FRAMES"

This invention relates to an engaging device for lens applicable to eyeglass frames. Standard eyeglass frames comprise two lens supports, each of which including an open ring of various shape, the ends of which are approached and maintained in contact with each other so as to firmly hold the lens. Said supports are maintained at spaced apart relationship from each other by a connection element and are connected to the side bars.

At present, particularly in metal frames, said supports for lens comprise an open ring of various shape, the ends of which are made to contact and are engaged by a screw, threaded projections being provided at each of said ends. Such a type of engagement involves substantial disadvantages during repeated assembling and disassembling where a lens has to be replaced. Thus, the screws are of extremely small size for operation thereon and may strip particularly when repeatedly unscrewed and rescrewed, and the whole must be rethreaded. Then, during use, the screw grip may become loose.

Another engaging device comprises a connecting element fixed to one end of the lens support. Said connecting device is provided with an opening in which a projecting element, arranged at the other end of the ring , is inserted.

This solution is rather complex to carry out and its components must be realized with great precision. Moreover it envolves an occupation of space which is unacceptable for the present eyeglass frames which tend to be very light.

Therefore, it is the object of the present invention to provide an engagement device for the ends of the supports for lens which pratically engages the two ends without any threaded elements and which however are formed by few elements having a minimum occupation of space. Said engagement device must involve a minimum cost and is directed for both nasal and temporal application, jus as provided in metal eyeglass frames of known type.

This object has been achieved by providing a device characterized by comprising a snap engagement means, so as to maintain the ends of each support in contact with each other to build up a closed ring or loop of various shape.

An embodiment provides that the snap engagement means comprise at least one resilient element apt to work on at least one projection provided at one end of the lens holding support, while the other end of the support is integral with the means engaging said resilient element.

A particular embodiment provides that said resilient element is placed on the connection element between the two supports.

Particularly, a solution provides that said snap engagement means is temporally disposed, that is at the side bars.

A further embodiment provides that said resilient element is fitted with a lead-in surface for engagement with the projection on the support end.

A particular embodiment provides that at least one of the projections on the support end has a lead-in surface for engagement with the resilient element.

A solution also provides that said snap element comprises a resilient element associated with a pin, which is suitable for insertion in a seat on one end of the support, while the other end is integral with engaging means of the resilient element. Additionally, both the pin end and seat may be made with lead-in surfaces to help the engagement.

A further embodiment provides a hooking element for holding the engagement between said pin and support end.

An embodiment provides that said snap element comprises a hooking means for firmly holding the two ends of the support.

A particular embodiment provides that said support ends are fitted with abutment elements for abutting against each other when the support ends contact.

A further embodiment provides that said hooking means are fitted with surfaces for snap engaging said abutment elements.

The invention will now be further described by some embodiments with reference to the accompanying drawings, in which:

Figs. 1, 1a and 2 show a first embodiment for lens nasal engagement;

Figs. 3 and 4 show another embodiment similar to that of Figs. 1 and 2, but for a temporal engagement;

Figs. 3a and 3b show an embodiment similar to that of Figs. 3 and 4;

Fig. 4b shows an explodes view of the few constituting elements of the embodiment of Figs. 3a_ and 4a;

Figs. 5 and 6 show a further embodiment for a lens nasal engagement;

Figs. 7 and 8 show a solution similar to that of Figs. 5 and 6 for a temporal engagement; and

Fig. 9 shows a further embodiment also of temporal engagement type.

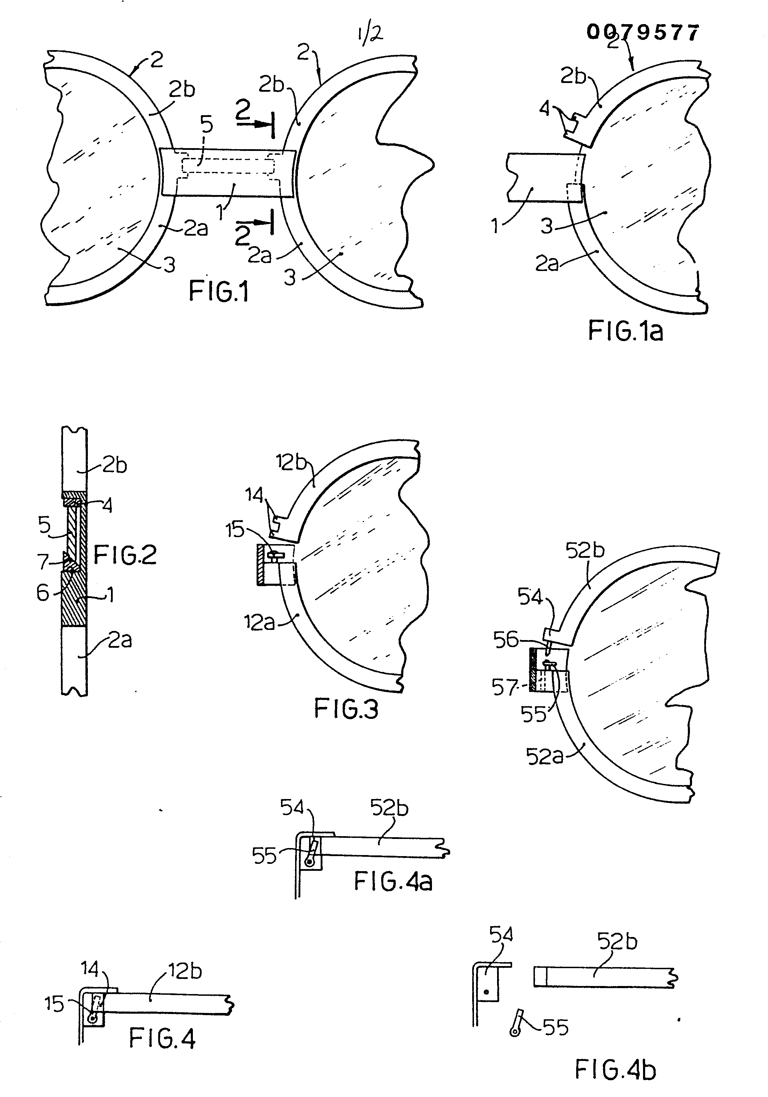

Fig. 1 shows a detail of the engagement device of nasal type. The ring-shaped is separated at support 2 end 2a and the end 2b, which will be hereinafter referred to as lower end and upper end, respectively. Such ends must be kept at contact relationship in order to hold the lens 3 there between. Each of the upper ends 2b are provided with two projections 4, as shown in Fig. 1a. The connection means 1 between the two ocular supports 2 are provided with a seat for a resilient foil 5. Said resilient foil 5 has a wedge-like end 7 to aid the engagement with the projection 4 which also has a wedge-like surface conjugated with the one of said resilient foil.

Optionally, one of said projections 4 could be provided with seats or grooves (not shown) in order to aid any engagement with the resilient foil.

The solution of temporal engagement is shown in Figs. 3 and 4. These figures show the connection element 11 which is fixedly welded to the lower end 12a of the ocular support. The upper end 12b is also provided with two projections 14. A resilient element 15 is fixedly disposed in said connection element 11 for engagement with the seat between said projections 14, as shown in Fig. 4.

A similar simplified embodiment of temporal engagement is shown in Figs. 3a, 4a. This figure illustrates a support having the end 52b terminating with a projecting element 54. A resilient element 55 is fixed in the connection element. Said resilient element, in the engaging condition, works on the projecting element 54, keeping it in close proximity with end 52a. Similar solution, i.e. comprising only one projecting element may be adopted for the nasal engagement.

Optionally the projecting element can terminate with a small pin 56 apt to penetrate into recess 57 arranged at end 52b of the support (of course on different planes) so as to keep unchanged the reciprocal positions of the ends during the normal use, i.e when the lens is inserted within the support.

Fig. 4b is a plant exploded view of the few constituting elements according to this embodiment.

In order to engage the supports with the lens according to the solutions shown in Figs. 1, 1a, 2, 3, 3a and 4, such a lens is inserted in the open ocular support, that is with the ends disengaged. Then the two ends of the support are approached until the element 5 or 15 or 55 snaps urging at least one of the projections toward the ring end. In case, an element may be provided for covering the whole. Thus, the lens is fixedly engaged within the support. In order to disengage the device, an action should be carried out by a suitable implement acting upon the resilient element. In case, the cover element could be provided with proper slots for easy access to the resilient element without disassembling the entire device.

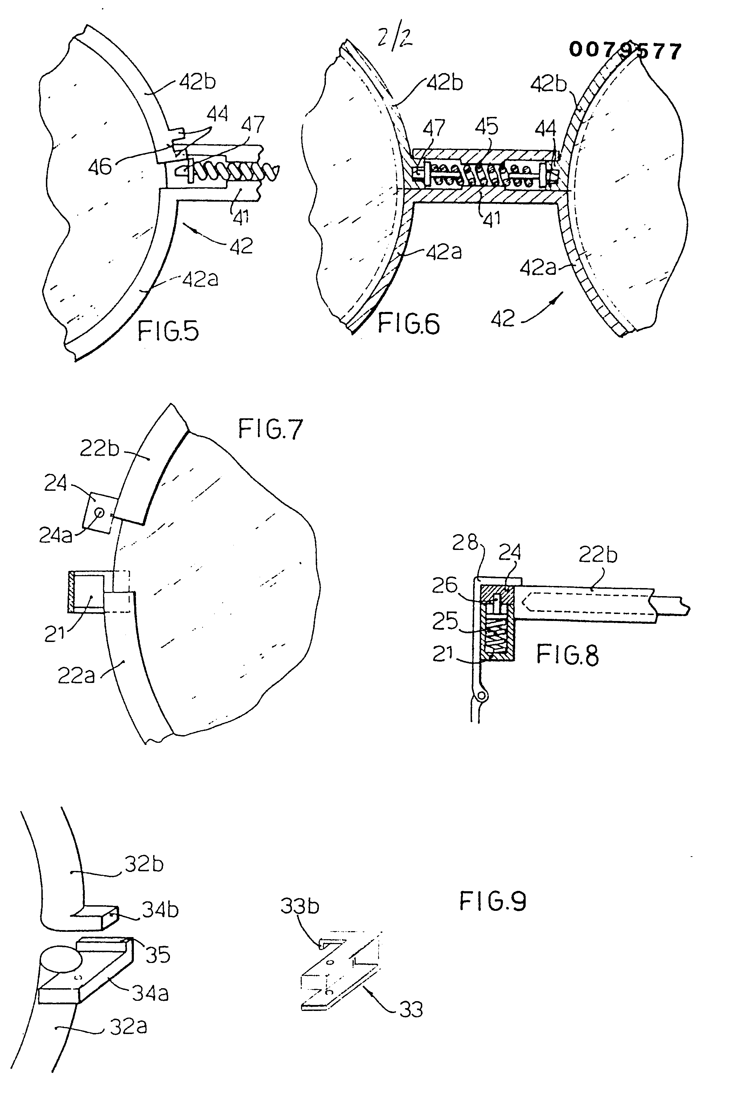

Figs. 5 and 6 show a solution for nasal engagement of the lens. Also in this case, supports 42 are divided at the ends 42a and 42b. The end 42a is secured to the element 41 and the end 42b is provided with two suitably shaped projections 44. The nasal connection element 41 has a seat for a transversely arranged spring 45, which has small pins 47 at the two ends. Said small pins can snap into the seat 46 between the projections 44, thus clamping said ends 42a and 42b against each other. Obviously, said spring 45 is suitably blocked within the connection element 41. Also in this case, both the ends of said small pins 47 and at least one of said projections 44 are provided with lead-in surfaces to aid said engagement.

For the disengagement it is necessary to move the small pin 47, which must be accessible through an opening provided in the cover-element. By a suitable implement the small pin can be moved, compressing the spring. In this way the small pin disconnects from the recess 46 between said two projections.

Figs. 7 and 8 show a further embodiment still for lens temporal engagement. This embodiment also provides the ocular support 22 comprising the ends 22a and 22b. The lower end 22a is fixedly engaged with a connection element 21.

Internally, said connection element 21 provides a resilient element, for example a spring 25, which terminates with a small pin 26 exiting from said connection element. A hooking element 28 is also provided. The upper element 22b of the support is fitted with a projection 24 internally provided with a seat 24a.

In order to engage the lens with the supports, the projections 24 must be moved near the small pin 26, so that the latter would snap and insert in said seat 24a. Said hooking element 28 acts as a stop to avoid disengagement. In order to disconnect the assembly, an implement must be inserted for small pin retraction on the cover element usually provided. Then, possible slots are provided for access to the small pin, as well as lead-in surfaces between said small pin and projections.

Fig. 9 shows a particular solution for temporal application. The two ends 32a and 32b of the ocular are provided with abutment elements 34a and 34b. Particularly, the abutment element 34a integral with the bar engaging device (not shown) is also provided with a projection 35. The two ends are approached, then the hooking element 33 fixed to end 32b, is engaged, which element is provided with at least a projection 33b for snapping and holding at least part of the abutment elements 34a and 34b. Disengagement occurs by a known implement.

It clearly appears that various solutions have been shown and described particularly for enabling snap engagement between the two ends of the ocular supports which, when holding the lens, must be firmly interengaged.

FRANCESCO MASCHERONI

21019 SOMMA LOMBARDO (Varese)

C L A I M S

1.  An engagement device for lens applicable to eyeglass frames, comprising two lens supports (2, 12, 22, 32 42, 52), each of which including an open ring of various shape, the ends of which are maintained in contact so as to firmly hold the lens, which supports are maintained at mutual spaced apart relationship by a connection element and are connected to the rim bars (10), characterized by the provision of a snap engagement element for maintaining the end of each support in contact.

2.  A device according to Claim 1, characterized in that said snap engagement means comprise at least one resilient element (5, 15, 55) apt to work on at least one projection (4, 14, 54) on one end (2b, 12b) of the lens holding support, while the other end of the support (2a, 12a, 52a) is integral with the means on which the resilient element is secured.

3.  A device according to Claim 1, characterized in that said snap element comprises a resilient element (25, 45) associated with at least one pin (26, 47) for insertion in a seat (24a, 46) provided on one end of a support (22b, 42b), while the other end (22a, 42a) is integral with the means on which the connection element is secured.

4. A device according to Claim 2 or 3, characterized in that said resilient element is provided on the connection element between the two supports (2, 42).

5. A device according to Claim 2 or 3, characterized in that said resilient element is temporally disposed, that is at the side bars.

6. A device according to Claim 2, characterized in that said resilient element (5, 15, 55) is provided with a lead-in surface for engagement with the projections (4, 14, 54) on the end (2b, 12b, 52b) of the support (2, 12, 52).

7. A device according to Claim 6, characterized in that at least one of the projections (4, 14, 54) on the end of the support has a lead-in surface for engagement with the resilient element (5, 15, 55).

8. A device according to Claim 3, characterized in that a hooking element (28) is provided for holding the engagement between the pin (26) and projection (24) of the end of the support (22b).

9. A device according to Claim 3, characterized in that at least one pin can be snap inserted within a seat provided between two projections (44) at one end of the support.

10. A device according to Claim 3, characterized in that the end of the pin (26, 47) is shaped to provide an engagement lead-in surface.

11. A device according to Claim 9, characterized in that at least one of the projections (44) provides a lead-surface for engagement with the pin (47).

12. A device according to Claim 1, characterized in that said snap element comprises a hooking means (33) for firmly holding the two ends (33a, 33b) of the support.

13. A device according to Claim 12, characterized in that said ends of the support (32a, 32b) are provided with abutment elements (34a, 34b) for abutting against each other when the support ends are in contact.

14. A device according to Claim 13, characterized in that said hooking means (33) are provided with guide surfaces for holding the abutment elements (34a, 34b) on the support end.

1/2

0079577

FIG.1

FIG.1a

FIG.2

FIG.3

FIG.4

FIG.4a

FIG.4b

0079577

FIG.5

FIG.6

FIG.7

FIG.8

FIG.9